# DEMANDE DE BREVET EUROPEEN

(11) **EP 0 841 389 A1**
(43) Date de publication de la demande: **13.05.1998**
(21) Numéro de dépôt: 97402551.2
(22) Date de dépôt: 28.10.1997
(51) Int. Cl.: C10M 159/20, C10M 159/24, B01J 13/00

(54) **Produits thio-phosphorés colloidaux dérivés de chaux colloidale, préparation et utilisations**

(30) Priorité: 06.11.1996 FR 9613630
(71) Demandeur: Institut Français du Pétrole, 92852 Rueil-Malmaison Cedex (FR)
(72) Inventeur: Delfort, Bruno, 75005 Paris (FR); Born, Maurice, 92000 Nanterre (FR); Chive, Agnès, 93350 Le Bourget (FR)

(57) **Abrégé**

On décrit de nouveau produits thio-phosphorés colloïdaux de calcium, qui peuvent être obtenus par un procédé comprenant l'addition d'au moins un sulfure de phosphore à de la chaux colloïdale, en présence d'un solvant ; le chauffage du mélange sous agitation; et l'élimination du solvant.

Ces produits peuvent être utilisés comme additifs antiusure et extrême-pression dans les huiles lubrifiantes.

## Description

La présente invention concerne de nouveaux produits thio-phosphorés colloïdaux dérivés de chaux colloïdale, utilisables comme additifs antiusure et extrême-pression dans les huiles lubrifiantes.

Dans l'art antérieur, on a abondamment décrit la préparation de produits colloïdaux surbasés et la transformation de ces produits visant à leur incorporer certains éléments, tels que par exemple le soufre, le phosphore et/ou le bore.

Ainsi par exemple, dans le brevet FR-B-2 645 168, au nom du même déposant, ont été décrits en particulier des composés thio-phosphorés obtenus par réaction d'au moins un composé surbasé avec un sulfure de phosphore. Le composé surbasé peut consister pour sa part en un sel de métal alcalin ou alcalino-terreux d'un acide tel qu'un acide sulfonique, surbasé par traitement d'un mélange réactionnel contenant ledit sel ainsi qu'au moins un oxyde ou hydroxyde de métal alcalin ou alcalino-terreux, au moyen d'un acide faible, tel que l'anhydride carbonique. Le composé surbasé peut consister plus particulièrement en un sulfonate de calcium surbasé par du carbonate de calcium. Le composé surbasé ainsi défini est mis à réagir avec un sulfure de phosphore, tel que P₄S₇, P₄S₉ et P₄S₁₀, utilisé en général en une proportion de 0,002 à 0,15 mole de phosphore par équivalent basique.

On a maintenant découvert qu'il était possible de préparer des produits colloïdaux thio-phosphorés présentant des propriétés améliorées, à partir de chaux Ca(OH)₂ sous forme colloïdale et non plus de carbonate de métal alcalin ou alcalino-terreux.

La chaux colloïdale a été décrite notamment dans la demande de brevet français FR-A-2 722 117, au nom du même déposant. Le contenu de cette demande de brevet doit être considéré comme inclus dans la présente description du fait de la mention qui en est faite.

Les produits thio-phosphorés de l'invention peuvent être définis d'une manière générale par le fait qu'ils résultent de la mise en oeuvre d'un procédé comprenant les étapes suivantes :
- a) on ajoute à de la chaux colloïdale au moins un sulfure de phosphore en présence d'au moins un solvant organique volatil ;
- b) on chauffe sous agitation, à une température allant par exemple jusqu'à la température de reflux dudit solvant volatil ; et
- c) on élimine ledit solvant volatil, par exemple sous pression réduite.

La chaux colloïdale peut être préparée, par exemple comme décrit dans la demande de brevet français FR-A-2 722 117 citée plus haut, par réaction d'oxyde ou d'hydrure de calcium ou du métal lui-même avec de l'eau dans un milieu organique et en présence d'un agent tensioactif, par exemple un alkylarylsulfonate de calcium.

Les milieux organiques dans lesquels peut être formée la chaux colloïdale dans l'étape (a) peuvent être :
- des hydrocarbures aliphatiques, tels que par exemple les hexanes ou les heptanes ;
- des hydrocarbures cycloaliphatiques, tels que par exemple le cyclohexane ;
- des hydrocarbures aromatiques, tels que par exemple le toluène ou les xylènes ;
- des hydrocarbures halogénés, par exemple chlorés, tels que le monochloro- ou le dichlorobenzène, ou le dichloro- ou le trichloro-éthane ;
- ou encore des composés hétérocycliques, tels que le tétrahydrofuranne.

Le tensioactif mis en jeu peut être plus particulièrement un alkylarylsulfonate de métal alcalin (sodium ou potassium) ou de métal alcalino-terreux (magnésium, calcium ou baryum). Ce sera le plus souvent un alkylarylsulfonate de calcium. Dans ce dernier cas, l'alkylarylsulfonate peut être formé in situ par réaction entre un acide alkylarylsulfonique et de l'hydroxyde de calcium formé dans le milieu.

La réaction peut être réalisée avantageusement en présence d'un promoteur, qui peut être par exemple un monoalcool aliphatique, tel que le méthanol. On peut en outre opérer au sein d'une huile de dilution minérale ou synthétique. La température de réaction est généralement comprise entre 0 et 80°C, le plus souvent entre 5 et 45°C.

La chaux colloïdale ainsi préparée présente en général une teneur en calcium qui peut aller jusqu'à environ 35 % en masse par rapport à la matière active (coeur de la micelle constitué d'hydroxyde de calcium + tensioactif, à l'exclusion de l'éventuelle huile de dilution). La réserve de basicité du produit sous forme diluée dans une huile à une concentration de 30 à 60 % en masse de matière active, correspond à un TBN ("Total Base Number") d'environ 100 à 500, le plus souvent de 200 à 400 mg de potasse par gramme de produit. La structure de la chaux Ca(OH)₂ constituant le coeur de la micelle est confirmée par l'analyse Infrarouge.

Enfin, la teneur en soufre du produit, qui provient de l'alkylarylsufonate utilisé comme tensioactif, peut être par exemple de 1 à 5 % en masse par rapport à la matière active.

Dans l'étape (a) du procédé de préparation des produits thio-phosphorés de la présente invention, on ajoute à de la chaux colloïdale un sulfure de phosphore, tel que P₄S₇, P₄S₉ et P₄S₁₀, mais plus particulièrement du décasulfure de tétraphosphore P₄S₁₀, par exemple en une proportion correspondant à un rapport atomique du phosphore au calcium de 0,1 à 2,5 et de préférence de 0,5 à 2. La chaux colloïdale est en général sous la forme sous laquelle elle est obtenue à l'issue du procédé décrit dans la demande de brevet français FR-A-2 722 117, c'est-à-dire que la composition utilisée comprend au moins l'agent tensioactif, en général un alkylaryl sulfonate de calcium, un liquide organique volatil, choisi plus particulièrement parmi ceux mentionnés plus haut, et une huile de dilution.

Puis, dans l'étape (b), on chauffe le mélange réactionnel sous agitation, par exemple à la température de reflux du solvant volatil.

On chauffe ensuite sous pression réduite pour éliminer le solvant volatil, dans l'étape (c).

Les produits de l'invention sont des produits colloïdaux qui se présentent sous la forme de micelles inverses (eau-dans-huile), par exemple à une concentration de 30 à 60 % dans l'huile de dilution mise en jeu. A ces concentrations, ils peuvent présenter une teneur en soufre de 1 à 15 % en masse et une teneur en phosphore de 0,2 à 7 % en masse.

Ils sont solubles et stables dans les huiles lubrifiantes, tant minérales que synthétiques, dans lesquelles ils peuvent être utilisés comme additifs antiusure et extrême-pression. A cet effet, ils peuvent être utilisés à des concentrations allant par exemple de 0,5 à 20 % en masse, de préférence de 1 à 5 % en masse.

Les exemples suivants illustrent l'invention sans la limiter.

### EXEMPLES

On décrit tout d'abord, dans les Exemples A et B, la préparation des compositions colloïdales qui seront utilisées dans les Exemples 1 et 2.

### Exemple A : Synthèse de chaux colloïdale.

Dans un réacteur équipé d'un agitateur et d'une ampoule de coulée, on introduit 88 g d'un acide alkylaryl sulfonique de masse molaire moyenne équivalente à 700, 350 ml de toluène, 15 ml de méthanol et 80 g d'une huile minérale 130 Neutral. On disperse dans le milieu 60 g (1,43 mole) d'hydrure de calcium CaH₂. Sous agitation, on introduit au moyen de l'ampoule une solution de 44,9 g (2,49 mole) d'eau dans 155 ml de tétrahydrofuranne en 5 heures à une température n'excédant pas 20°C. On maintient le milieu à cette température pendant 3 heures. Après filtration, on élimine le solvant sous pression réduite. On obtient un produit homogène contenant 16,3 % en masse de calcium et 2,3 % en masse de soufre et dont la composition est indiquée dans le tableau 1.

### Exemple B : Synthèse de carbonate de calcium colloïdal.

Dans un réacteur, on introduit 40,3 g d'un acide alkylaryl sulfonique contenant 70 % en masse de matière active et 30 % en masse d'huile de dilution et dont la masse molaire équivalente est de 700, 200 ml de xylène, 55 ml de méthanol et 39,5 g d'une huile minérale 130 Neutral Solvent. On disperse dans ce milieu 23 g (0,31 mole) de chaux Ca(OH)₂ et, sous forte agitation, on introduit par bullage 10 g (0,227 mole) de dioxyde de carbone en 2 heures à une température n'excédant pas 40°C. On procède ensuite à l'élimination de la phase solide résiduelle par filtration, puis on élimine par évaporation sous pression réduite les solvants volatils, ainsi que l'eau formée lors de la réaction. On recueille 92 g d'un produit liquide, homogène, dont la composition est indiquée dans le tableau 1.

On résume dans le tableau 1 suivant la composition des substrats colloïdaux utilisés dans les Exemples A et B.

**Tableau 1**

| **Composition** | **Particules** | **colloïdales** | **Agent tensioactif*** | **Huile** |
|---|---|---|---|---|
| **Exemple** | **Nature** | **(% masse)** | **(% masse)** | **(% masse)** |
| **A** | Ca(OH)₂ | 25,1% | 25,1% | 49,8% |
| **B** | CaCO₃ | 22,8% | 26,0% | 51,2% |

| | | | | |
|---|---|---|---|---|
| * Alkylarylsulfonate de calcium. | | | | |

L'Exemple 1 qui suit illustre l'invention. Les Exemples 2 et 3 sont donnés à titre de comparaison.

### Exemple 1.

Dans un réacteur, on introduit 26,7 g de chaux Ca(OH)₂ colloïdale préparée comme décrit dans l'Exemple A, 2 g de tétraphosphore-décasulfure P₄S₁₀ et 150 ml de xylène. On maintient le milieu à 30°C sous agitation pendant 5 heures, puis on le porte à la température de reflux du xylène pendant une heure. Après évaporation du xylène sous pression réduite, on obtient 27,1 g d'un produit homogène visqueux dont les caractéristiques sont les suivantes :

| | |
|---|---|
| Ca | 14,1 % en masse |
| P | 2,1 % en masse |
| S | 7,0 % en masse |

### Exemple 2 (comparatif).

Dans un réacteur, on introduit 26,7 g de carbonate de calcium CaCO₃ colloïdal préparé comme décrit dans l'Exemple B, 2 g de tétraphosphore-décasulfure P₄S₁₀ et 150 ml de xylène. On maintient le milieu à 30°C sous agitation pendant 5 heures, puis on le porte à la température de reflux du xylène pendant une heure. Après évaporation du xylène sous pression réduite, on obtient 27 g d'un produit homogène visqueux dont les caractéristiques sont les suivantes :

| | |
|---|---|
| Ca | 8,9 % en masse |
| P | 2,0 % en masse |
| S | 4,1 % en masse |

### Exemple 3 (comparatif).

On reproduit l'Exemple 1 en remplaçant les 26,7 g de chaux colloïdale par un mélange constitué de chaux Ca(OH)₂ non-colloïdale dispersée par le même agent tensioactif, dans la même huile minérale de dilution que ceux utilisés pour préparer la chaux colloïdale décrite dans l'Exemple A ; les proportions dudit mélange en ces trois constituants sont les mêmes que pour le produit de l'Exemple A.

Dans ces conditions, on obtient 23 g d'un produit dont les caractéristiques sont les suivantes :

| | |
|---|---|
| Ca | 2,5 % en masse |
| P | 1,6 % en masse |
| S | 4,0 % en masse |

### Exemple 4. Examen comparatif de la conversion chimique du sulfure de phosphore dans les Exemples 1, 2 et 3.

La conversion chimique du phosphore est calculée en comparant la masse de phosphore apportée par 2 g de P₄S₁₀ et celle déterminée dans le produit colloïdal, c'est-à-dire le produit de la masse de produit colloïdal par le pourcentage massique de phosphore analysé.

La conversion chimique du soufre est calculée de manière identique à celle du phosphore en prenant en compte de plus la quantité de soufre due à l'agent tensioactif présent dans chacun des produit colloïdaux considérés.

Les résultats figurent dans le tableau 2 suivant :

**Tableau 2**

| **Produit de l'Exemple** | **Conversion P (%)** | **Conversion S (%)** |
|---|---|---|
| **1** | 100 | 100 |
| **2** | 100 | 54 |
| **3** | 65 | 33 |

Dans les Exemples 1 et 2, la totalité du phosphore apporté par 2 g de P₄S₁₀ est convertie en produit colloïdal, tandis que 100% du soufre est converti avec de la chaux colloïdale dans l'Exemple 1 contre 54% seulement avec du carbonate de calcium colloïdal dans l'Exemple 2. Dans l'Exemple 3, les conversions respectives du soufre et du phosphore apportés par P₄S₁₀ sont incomplètes.

## Revendications

1. Produit colloïdal thio-phosphoré dérivé de la chaux colloïdale, caractérisé en ce qu'il est obtenu par un procédé comprenant les étapes suivantes :
- a) on ajoute à de la chaux colloïdale au moins un sulfure de phosphore dans un solvant organique volatil ;
- b) on chauffe sous agitation ; et
- c) on élimine le solvant.

2. Produit colloïdal thio-phosphoré selon la revendication 1, caractérisé en ce que la chaux colloïdale est constituée d'hydroxyde de calcium Ca(OH)₂ maintenu en suspension colloïdale sous la forme de micelles inverses dans une huile au moyen d'un agent tensioactif.

3. Produit colloïdal thio-phosphoré selon la revendication 1 ou 2, caractérisé en ce que ledit agent tensioactif est un alkylarylsulfonate de calcium.

4. Produit colloïdal thio-phosphoré selon l'une des revendications 1 à 3, caractérisé en ce que, dans l'étape (a), le sulfure de phosphore utilisé est choisi parmi P₄S₇, P₄S₉ et P₄S₁₀.

5. Produit colloïdal thio-phosphoré selon l'une des revendications 1 à 4, caractérisé en ce que, dans l'étape (a), le sulfure de phosphore utilisé est P₄S₁₀.

6. Produit colloïdal thio-phosphoré selon l'une des revendications 1 à 5, caractérisé en ce que, dans l'étape (a), le sulfure de phosphore est utilisé en une proportion correspondant à un rapport atomique du phosphore au calcium de 0,1 à 2,5.

7. Produit colloïdal thio-phosphoré selon l'une des revendications 1 à 6, caractérisé en ce que, dans l'étape (a), le sulfure de phosphore est utilisé en une proportion correspondant à un rapport atomique du phosphore au calcium de 0,5 à 2.

8. Produit colloïdal thio-phosphoré selon l'une des revendications 1 à 7, caractérisé en ce que, dans l'étape (a), le solvant volatil est un hydrocarbure aliphatique, un hydrocarbure cycloaliphatique, un hydrocarbure aromatique, un hydrocarbure halogéné ou un composé hétérocyclique.

9. Produit colloïdal thio-phosphoré selon l'une des revendications 1 à 8, caractérisé en ce que, dans l'étape (b), le chauffage est effectué à une température allant jusqu'à la température de reflux du solvant volatil.

10. Produit colloïdal thio-phosphoré selon l'une des revendications 1 à 9, caractérisé en ce qu'il se présente sous la forme de micelles inverses eau-dans-huile et présente une teneur en soufre de 1 à 15 % en masse et une teneur en phosphore de 0,2 à 7 % en masse.

11. Utilisation d'un produit colloïdal thio-phosphoré selon l'une des revendications 1 à 10 comme additif antiusure et extrême-pression dans une huile lubrifiante minérale ou synthétique, à une concentration allant de 0.5 à 20 % en masse.
